# EUROPEAN PATENT SPECIFICATION

(11) **EP 1 046 089 B1**
(45) Date of publication and mention of the grant of the patent: **03.09.2003**
(21) Application number: 99900533.3
(22) Date of filing: 07.01.1999
(51) Int. Cl.: G05B 19/042

(54) **A POSITIVE SAFETY CONTROL SYSTEM**
POSITIVES SICHERHEITSSTEUERUNGSSYSTEM
SYSTEME DE SECURITE FIABLE

(30) Priority: 07.01.1998 FR 9800079
(43) Date of publication of application: 25.10.2000
(73) Proprietor: Honeywell S.A., 91190 Saint-Aubin (FR); Fox-Male, Nicholas Vincent Humbert, High Wycombe, Buckinghamshire HP11 2UW (GB)
(72) Inventor: PHILIPPOTEAU, Hélène, 91190 Saint-Aubin (FR)
(74) Representative: Fox-Male, Nicholas Vincent Humbert
(86) International application number: GB9900005
(87) International publication number: WO99035544

(56) References cited:
- US-A- 4 149 069
- US-A- 4 880 994
- US-A- 5 067 080

## Description

The present invention relates to a positive safety control system.

It is known that in safety control systems it is necessary to be able to detect in a reliable manner any component failure and this must result in the immediate halting of the dangerous machine controlled.

In order to ensure a positive safety operation generally speaking in the absence of a control or in the event of a control failure provision is made for the supply circuit of the dangerous machine to be automatically opened. In addition to prevent a failure of the control resulting in the closing of the supply circuit of the dangerous machine generally speaking provision is made for closing the supply circuit of the dangerous machine with two power outputs associated with two parallel channels of the control system. Each power output is connected to a control unit associated with a logic unit of an electrically insulated logic circuit of the control unit and the status of the control unit of each channel is transmitted to the logic unit of the other channel to effect the opening of the two control units in the event of a difference in their respective status. As a complementary measure provision is also made to carry out periodically a fine pulse test which consists of simulating very briefly a command for opening the supply circuit and for making sure that the power outputs have been suitably deactivated in response to this command with the duration of these commands being sufficiently brief so that the opening units of the supply circuit of the dangerous machine have no time to react.

A problem with the existing control systems is due to the fact that for synchronisation reasons the logic units of the two channels are connected to a common clock. The logic units are themselves synchronous and the change in their status depends therefore directly on the operation of the clock. If the clock becomes defective the outputs thus continue to have the status which they bad at the time when the clock was lost in such a way that the opening of the supply circuit of the dangerous machine can no longer be effected.

The present invention provides a positive safety control system as defined in Claim 1.

Thus, a control system of the above-mentioned type is being proposed according to the invention in which downstream from the logic unit each logic circuit includes a conversion unit connected to the clock for converting a logic signal for activating the corresponding power output into a pulsed signal and a filtration and rectification unit is disposed between the conversion unit and the corresponding control unit.

Consequently in the event of the failure of the clock the conversion unit no longer transmits a pulsed signal but a continuous signal which is stopped by the filtration unit. As the control of the power output can no longer be closed the user of the dangerous machine is therefore immediately given a warning of the failure of the clock. On the other hand if the clock functions satisfactorily the pulsed signal crosses the barrier of the filter and is then rectified and closes the corresponding control unit in the normal way so as to activate the power output.

Moreover the logic units are generally supplied at a voltage less than the power outputs. Consequently a d.c. converter which is common to the two channels is generally fitted in parallel on the supply line of the power outputs. In the event of the failure of the converter there is a danger of an excess voltage of the logic units. An excess voltage of this type can cause a short circuit in certain components and generate signals which are the equivalent of the logic signals for activating the power outputs at the output of the logic units. There is no longer any assurance as to the safety of the opening of the supply circuits of the dangerous machine.

According to an advantageous version of the invention the filtration and rectification unit operates in accordance with a voltage which is inverse to that of the supply voltage. Thus even if following a short circuit of different components of the logic circuit the supply voltage reaches the filtration and rectification units it cannot have any effect on the control units of the power outputs in such a way that the latter will be deactivated. Once again the user will be warned immediately of the failure of the control device.

Other characteristics and advantages of the invention will be revealed as a result of reading the description which follows of a non-restrictive preferred embodiment of the invention with reference to the attached figures where:
Figure 1 is a block diagram of the positive safety control system according to the invention;
Figure 2 is a detailed diagrammatic representation of the filtration and rectification unit and
Figure 3 is a schematic illustration of the signals at different points of the logic circuit.

With reference to the figures the system according to the invention includes in a manner known in itself two parallel channels each one of which includes a power output SP connected to a control unit 1 which itself is connected to a source of d.c. voltage, for example a voltage source of 24 volts and associated with a logic circuit 2. The logic circuits 2 are supplied by a converter 3 which is common to the two channels and which supplies a voltage which is less than the supply voltage of the power outputs for example a voltage of + 5 volts and their operation is effected under the control of a clock 4 which is also common to the two channels.

Each logic circuit includes in a manner which is also known in itself a logic unit 5 connected to logic sensors 6, for example detectors of a presence in the vicinity of a dangerous part of the controlled machine and at an input of a logic cell 7 having a second input connected to a test generator by fine pulse 8. Again in a manner known in itself each logic unit 5 is connected to the output of the control unit of the opposite channel.

According to the invention the logic circuit of each channel also includes a conversion unit 9 disposed between the output of the logic unit 5 and the input of the corresponding logic cell 7 and a filtration and rectification unit 10 disposed between the logic cell 7 and the corresponding control unit 1 of a power output.

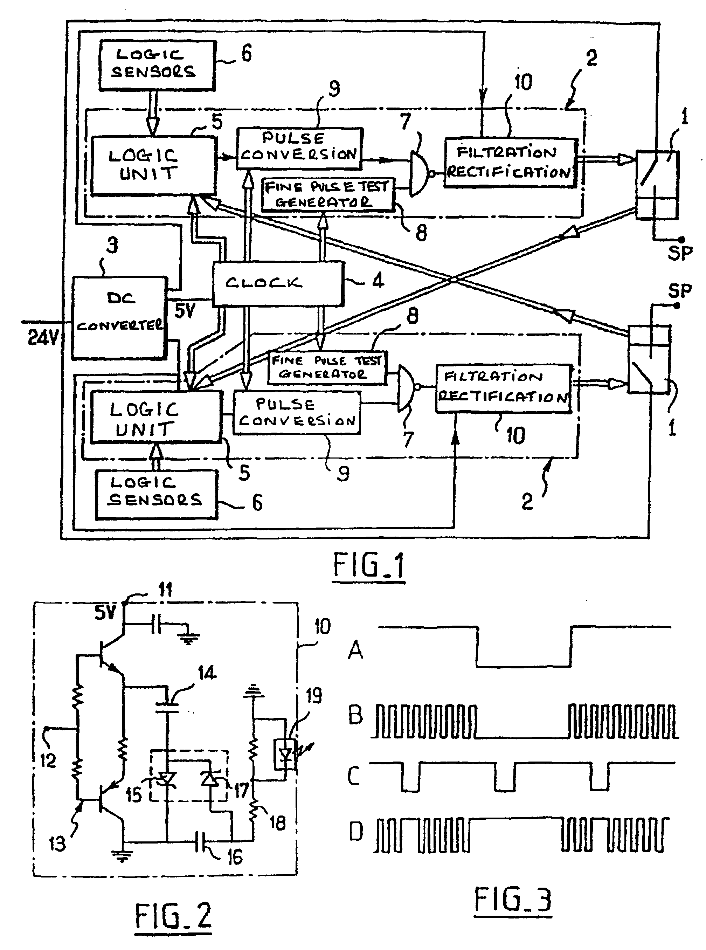

The logic units provide in a conventional manner for a processing of the signals coming from the logic sensors and the output of the control unit of the opposite channel to supply a logic signal such as that shown at A in Fig. 3 so that the high level of the logic signal corresponds to an activation control of the power output whilst the low level corresponds to a deactivation of the power output. The conversion units 9 are conventional units by means of which a continuous signal is converted into a pulsed signal as shown at B in Fig. 3. The structure of the conversion units 9 is known in itself and is therefore not illustrated in a detailed manner in the figures. The fine pulse generators 8 which are also of a structure known in itself give a periodical slot signal as illustrated at C in Fig. 3. The logic cells 7 provide a combination of the signals given by the conversion units 9 and the test generators by fine pulse according to a signal illustrated at D in Fig. 3.

The detailed structure of a preferred embodiment of the filtration and rectification unit 10 is illustrated in Fig. 2. The filtration and rectification unit includes a supply input 11 and a logic input 12 connected to an amplifier stage 13 formed by two push-pull transistors. A capacitor 14 is connected to the output of the amplifier stage and effects a filtration of the continuous signals with only the pulsed signals being transmitted by the capacitor 14. In this connection it should be noted that it is of little importance that the continuous portions of the signal subjected to the filtration and rectification unit be of a high or low level.

The pulsed signal transmitted beyond the capacitor 14 is a floating signal which is made negative by imposing a low positive limit for example 0.4 volts by means of a Schottky diode 15 connected to the capacitor 14 on the one hand and to earth on the other hand. The pulsed pulses for example at 500 kHz oscillate therefore between a voltage of -3.6 volts and + 0.4 volts which is therefore substantially reciprocal to the voltage supplied by the converter 3. The pulsed negative voltage which is obtained in this way is rectified by a capacitor 16 associated with a diode 17 connected in opposition to the diode 15 so as to prevent a direct discharge of the capacitor 16 in the amplifier stage 13. In this way a negative d.c. voltage is obtained in resistance 18 which is supplied to a coupling unit 19 with the control unit 1 of the power output which here consists of an optocoupler of which only the light-emitting diode is shown here.

It should be noted that in the event of the failure of the clock 4 the signal coming from the logic unit 5 will not be converted into a pulsed signal and will therefore be stopped by the capacitor 14 in such a way that the optocoupler will not be activated and the switch associated with the corresponding power output will be opened. In addition in cases where following on a short circuit the output voltage of the converter 3 is brought to the optocoupler 19 this voltage would be a positive voltage which could not activate the optocoupler 19 so that the switch associated with the corresponding power output would also be kept open.

Any component failure in the filtration and rectification unit including the short-circuiting of the capacitor 14 would thus involve the opening of the switch associated with the corresponding power output.

In particular although the feature of the invention according to which the filtration and rectification unit operates according to a voltage which is the reverse of the supply is described in conjunction with a system including a converter, this feature would also apply to a system in which the logic unit would operate at the same voltage level as the power outputs.

## Claims

1. Positive safety control system including two parallel channels each one including a power output (SP) and a control unit (1) associated with a logic unit (5) of an electrically insulated logic circuit (2) in the control unit with the logic circuits (2) being connected to a common clock (4), **characterized in that** downstream of the logic unit (5) each logic circuit includes a conversion unit (9) connected to the clock (4) so as to convert a logic activation signal of the corresponding power output into a pulsed signal only when it receives clock pulses from the clock circuit (4) and **in that** a filtration and rectification unit (10) is disposed between the conversion unit (9) and the corresponding control unit, and said filtration and rectification unit (10) transmits pulsed signals but blocks continuous signals.

2. A system according to claim 1 **characterized in that** the filtration and rectification units (10) operate according to an inverse voltage of a supply voltage.

## Patentansprüche

1. Positives Sicherheitssteuersystem mit zwei parallelen Kanälen, die jeweils einen Leistungsausgang (SP) und eine Steuereinheit (1), die einer Logikeinheit (5) einer elektrisch isolierten Logikschaltung (2) in der Steuereinheit zugeordnet ist, enthalten, wobei die Logikschaltungen (2) mit einem gemeinsamen Takt (4) verbunden sind, **dadurch gekennzeichnet, daß** signalabwärts der Logikeinheit (5) jede Logikschaltung eine mit dem Takt (4) verbundene Umsetzungseinheit (9) enthält, um so ein logisches Aktivierungssignal des entsprechenden Leistungsausgangs nur dann in ein gepulstes Signal umzusetzen, wenn sie Taktimpulse aus der Taktschaltung (4) empfängt, und dadurch, daß eine Filtrierungs- und Gleichrichteinheit (10) zwischen der Umsetzungseinheit (9) und der entsprechenden Steuereinheit angeordnet ist und die Filtrierungs- und Gleichrichteinheit (10) gepulste Signale durchläßt, aber kontinuierliche Signale abblockt.

2. System nach Anspruch 1, **dadurch gekennzeichnet, daß** die Filtrierungs- und Gleichrichteinheiten (10) gemäß einer inversen Spannung einer Versorgungsspannung wirken.

## Revendications

1. Système de commande à sécurité positive comprenant deux canaux parallèles, chacun comprenant une sortie de puissance (SP) et une unité de commande (1) associée à une unité logique (5) d'un circuit logique électriquement isolé (2) dans l'unité de commande, les circuits logiques (2) étant connectés à une horloge commune (4), **caractérisé en ce que**, en aval de l'unité logique (5), chaque circuit logique comprend une unité de conversion (9) raccordée à l'horloge (4), de façon à convertir un signal logique d'activation de la sortie de puissance correspondante en un signal pulsé seulement quand il reçoit des impulsions d'horloge du circuit d'horloge (4), et **en ce que** une unité de filtrage et redressement (10) est disposée entre l'unité de conversion (9) et l'unité de commande correspondante, et ladite unité de filtrage et redressement (10) transmet les signaux pulsés mais bloque les signaux continus.

2. Système selon la revendication 1, **caractérisé en ce que** les unités de filtrage et redressement (10) fonctionnent selon une tension inverse d'une tension d'alimentation.
